# EUROPÄISCHE PATENTSCHRIFT

(11) **EP 4 102 100 B1**
(45) Veröffentlichungstag und Bekanntmachung des Hinweises auf die Patenterteilung: **09.07.2025**
(21) Anmeldenummer: 22173408.0
(22) Anmeldetag: 16.05.2022
(51) Int. Cl.: F16G 3/06

(54) **VERBINDUNG**
CONNECTION
LIAISON

(30) Priorität: 10.06.2021 DE 102021205907
(43) Veröffentlichungstag der Anmeldung: 14.12.2022
(73) Patentinhaber: ContiTech Deutschland GmbH, 30175 Hannover (DE)
(72) Erfinder: Schöffer, Jannis, 30165 Hannover (DE); Lorenz, Eduard, 30165 Hannover (DE); Quass, Jan-Henning, 30165 Hannover (DE); Schwefe, Thorsten, 30165 Hannover (DE)
(74) Vertreter: Preusser, Andrea

(56) Entgegenhaltungen:
- DE-A1- 102019 213 022
- DE-A1- 2 813 130
- DE-U1- 29 519 856
- GB-A- 127 470
- US-A1- 2020 187 420

## Beschreibung

Die Erfindung betrifft eine Verbindung mit einem Verbindungselement und wenigstens einem Ende eines bandförmigen Artikels gemäß dem Oberbegriff des Anspruchs 1. Weiterhin betrifft die Erfindung ein Verbindungselement zur Verwendung in einer erfindungsgemäßen Verbindung gemäß Anspruch 13, einen bandförmigen Artikel gemäß Anspruch 14 zur Verwendung in einer erfindungsgemäßen Verbindung, sowie ein Antriebs- oder Fördersystem gemäß Anspruch 15 mit mindestens einer erfindungsgemäßen Verbindung.

### Stand der Technik

Aus dem Stand der Technik sind bandförmige Artikel wie Förderbänder oder Antriebsriemen bekannt, die üblicherweise nicht bereits als endlose Bänder hergestellt und dann eingebaut werden können. Vielmehr werden sie in Einzellängen gefertigt und dann vor Ort mit Hilfe von speziellen Verbindern zu einem endlos geschlossenen Band zusammengebaut, wie zum Beispiel in US2020/187420A1 gezeigt wird. Dies gilt ebenso für offene Bänder, zum Beispiel zur Verwendung als Aufzugsriemen, welche ebenfalls aus einzelnen Segmenten zu einem längeren Riemen verbunden werden.

Um die Einzellängen der bandförmigen Artikel für die Verbindung vorzubereiten, müssen teilweise recht aufwändige Arbeiten durchgeführt werden. Ein Rückschlagen oder Umbucken, d.h. ein Umklappen der Enden auf sich selbst, ist dabei noch die einfachste Art der Vorbereitung. Oft ist auch das Ausstanzen von Enden zur Präparation einer stoffschlüssigen Verbindung, zum Beispiel durch Verschweißen erforderlich.

Für viele Anwendung ist es darüber hinaus von großer Bedeutung, dass die Verbindungsstellen mit einfachen Mitteln geöffnet und wieder verschlossen werden können. Dies ist unter anderem für den verschleißbedingten Wechsel einzelner Komponenten erforderlich.

Die EP 3 078 880 B1 offenbart einen Riemen als endloses Zugmittel für Förderbänder landwirtschaftlicher Maschinen. Der Riemen besteht hierbei aus einem durch Gewebelagen verstärkten Polymer, wobei mindestens eine Gewebelage jedes Riemenendes auf sich selbst um eine Verdickung herum zurückgeschlagen ist. Die so präparierten Riemenenden werden in einen aus zwei Halbschalen bestehenden Käfig eingelegt, wobei die beiden Halbschalen gegeneinander verschraubt werden, sodass die Riemenenden zwischen den beiden Halbschalen eingeklemmt werden.

Aus der DE 10 2019 213 022 A1 ist ein Fördersystem mit mindestens zwei beabstandet nebeneinander angeordneten Riemen aus elastomerem Material bekannt, die durch einen ihre Enden verbindenden Riemenverbinder als Endlosriemen ausgebildet sind. Jeder der Riemen besteht aus einer oder mehreren Einzellängen, deren Enden zu einem Endlosriemen verbunden sind. Es ist mindestens eine Mitnehmerleiste an mindestens einer Verbindung mit einem der Riemen als die Enden einer oder mehrerer Riemen-Einzellängen zu einem Endlosriemen verbindender Riemenverbinder ausgebildet.

Bei den eingangs vorgestellten Lösungen erweist es sich als nachteilig, dass zwischen den Kontaktflächen der Klemmverbindung und des Riemens ausschließlich eine kraftschlüssige Verbindung wirkt. Bei Überschreiten der Haftreibung und Eintreten von Gleitreibung ist eine Relativbewegung zwischen dem Riemen und dem Riemenverbinder möglich, sodass eine Zugkraft in Längsrichtung des Riemens ausschließlich über den verbleibenden Formschluss zwischen dem Riemenverbinder und der durch den Riemen umschlungenen Verdickung erfolgt. So entstehen sehr hohe Lastspitzen innerhalb des Riemens, wodurch dieser im Bereich des Umschlingungsbogens um die Verdickung beschädigt werden kann.

### Aufgabe

Der Erfindung liegt die Aufgabe zugrunde, eine Verbindung mit einem Verbindungselement mit mindestens einem Ende eines bandförmigen Artikels bereit zu stellen. Verglichen zu den bekannten Lösungen soll die Verbindungsstelle dahingehend verbessert werden, dass große Zugkräfte übertragen werden können, ohne dass der bandförmige Artikel beschädigt wird und bzw. oder sich die Verbindung löst.

### Lösung der Aufgabe

Die Lösung dieser Aufgabe ergibt sich durch eine Verbindung mit den Merkmalen des Anspruch 1.

Anspruch 12 betrifft ein Antriebs- oder Fördersystem mit mindestens einer erfindungsgemäßen Verbindung. Weitere vorteilhafte Ausbildungen sind in den abhängigen Ansprüchen offenbart.

### Vorteile der Erfindung

Die in dem Anspruch 1 offenbarte erfindungsgemäße Verbindung umfasst ein Verbindungselement und wenigstens ein Ende eines bandförmigen Artikels. Der bandförmige Artikel ist aus mindestens einer Festigkeitsträgerlage aus Stahlkorden und einem diese zumindest im Wesentlichen umschließenden polymeren Material aufgebaut, wobei der bandförmige Artikel eine Oberseite und eine Unterseite aufweist. Das Verbindungselement weist mindestens ein Sperrelement und eine Klemmverbindung auf, wobei die Klemmverbindung mindestens ein erstes Klemmprofil aufweist. Die mindestens eine Festigkeitsträgerlage mindestens eines Endes ist um eine vorbestimmte Länge von dem die Festigkeitsträgerlage umgebenden polymeren Material befreit, wobei die mindestens eine Festigkeitsträgerlage mindestens eines Endes das Sperrelement zumindest teilweise, vorzugsweise um 180° umschlingt und die Festigkeitsträgerlage mindestens eines Endes zwischen dem Sperrelement und dem mindestens ersten Klemmprofil festgeklemmt ist.

Erfindungsgemäß sind das erste Klemmprofil oder das Sperrelement oder das erste Klemmprofil und das Sperrelement aus einem Material mit einer im Vergleich zu den Stahlkorden der Festigkeitsträgerlage geringeren Härte ausgebildet, sodass bei Ausübung einer Klemmkraft das Material des ersten Klemmprofils und / oder des Sperrelementes in Kontakt mit der Festigkeitsträgerlage kaltverformt wird und sich die Oberflächenstruktur der Festigkeitsträgerlage als Negativ in dem ersten Klemmprofil und / oder dem Sperrelement abbildet, sodass ein Formschluss zwischen Festigkeitsträgerlage und dem ersten Klemmprofil und / oder dem Sperrelement ausgebildet wird.

Somit kann der bandförmige Artikel aus einem bandförmigen Artikel allein, welcher endlos geschossen ist, oder aus einer Reihenschaltung aus einer Vielzahl von bandförmigen Artikeln, welche offen oder endlos geschlossen sind, ausgebildet sein. Die Verbindung umfasst ein Verbindungselement und wenigstens ein Ende des bandförmigen Artikels, das mit dem Verbindungselement in Kontakt steht. Das Verbindungselement kann darüber hinaus mit einem anderen Gegenstand in Verbindung stehen. Ebenso kann auch die Reihenschaltung mehrerer bandförmiger Artikel über eines oder mehrerer derartiger Verbindungselemente erfolgen.

Mit anderen Worten gesagt sind die Stahlkorde der Festigkeitsträgerlage mindestens eines Endes des bandförmigen Artikels von dem polymeren Material befreit. Die frei gelegten Stahlkorde können um das Sperrelement derart umschlungen sein, sodass die Stahlkorde den Außenumfang des Sperrelementes umgeben. Dabei können diese in einer Ausführungsform auch von dem Außenumfang des Sperrelementes ablaufen und auf sich selbst zum Liegen kommen.

So angeordnet, wird der mindestens eine Verbund aus Sperrelement und dem Stahlkord von der Klemmverbindung des Verbindungselementes aufgenommen. Die Klemmverbindung weist mindestens ein erstes Klemmprofil auf, welches auf der dem Verbund aus Sperrelement und dem Stahlkord zugewandten Seite mindestens eine konkave Ausnehmung aufweisen kann, die quer zur Längsrichtung des bandförmigen Artikels ausgerichtet ist. In dieser konkaven Ausnehmung des Klemmprofils kann der Verbund aus Sperrelement und Stahlkord aufgenommen werden. So kann die Festigkeitsträgerlage mindestens eines Endes zwischen dem Sperrelement und dem mindestens ersten Klemmprofil festgeklemmt werden. Für die Aufnahme eines zweiten Endes des bandförmigen Artikels kann das Klemmprofil eine weitere konkave Ausnehmung aufweisen. Die Klemmverbindung kann in weiteren Ausführungsformen auch mehrere Klemmprofile und mehrere Sperrelemente aufweisen.

Das mindestens erste Klemmprofil oder das Sperrelement oder das mindestens erste Klemmprofil und das Sperrelement sind aus einem Material ausgebildet, das eine im Vergleich zum Stahlkord geringere Härte aufweist. Durch diese Materialpaarung kann das vergleichsweise weiche Material des Klemmprofils und /oder des Sperrelementes bei Ausübung einer Klemmkraft auf die härtere Festigkeitsträgerlage durch diese kaltverformt werden.

Mit anderen Worten gesagt kann sich die Kontur der Festigkeitsträgerlage in das Material des Klemmprofils und / oder des Sperrelementes eindrücken. Da der Stahlkord aus mehreren umeinander gedrehten Litzen seilförmig ausgebildet sein kann, kann der Stahlkord eine strukturierte Oberfläche aufweisen, die sich mit dem kaltverformten Material des Klemmprofils und / oder des Sperrelementes verzahnen kann und so zusätzlich zu dem Kraftschluss, gebildet aus den Reibbeiwerten zwischen dem Stahlwerkstoff der Festigkeitsträgerlage und dem Material des Klemmprofils und / oder des Sperrelementes, einen Formschluss bilden kann. Hierdurch können auf vorteilhafte Weise über die Verbindung Kräfte übertragen werden, die größer als die Haftreibung zwischen Stahlwerkstoff der Festigkeitsträgerlage und dem Material des Klemmprofils und / oder des Sperrelementes sind. Durch die konkave Ausnehmung des Klemmprofils kann zudem auf besonders vorteilhafte Weise sichergestellt werden, dass eine möglichst große Kontaktfläche zwischen dem Stahlkord und dem Klemmprofil vorhanden sein kann, wodurch die Verbindung auch schon bei vergleichsweise geringer Klemmkraft relativ große Zugkräfte übertragen kann.

Gemäß Anspruch 1 weist das erste Klemmprofil und / oder das Sperrelement an der der Festigkeitsträgerlage zugewandten Oberfläche Rillen auf, wobei die Rillen gleichsinnig zur Festigkeitsträgerlage aus Stahlkorden ausgerichtet und ausgebildet sind, die Stahlkorde zumindest teilweise zu umgreifen. Durch die Profilierung des Klemmprofils und / oder des Sperrelementes kann die Festigkeitsträgerlage in Verbindung mit einer zusätzlichen Kaltverformung des Materials des Klemmprofils und / oder des Sperrelementes nochmals tiefer in das Klemmprofil und / oder das Sperrelement eindringen. Hierdurch kann die Kontaktfläche zwischen Klemmprofil und / oder Sperrelement und Festigkeitsträgerlage nochmals vergrößert werden, was wie eingangs erläutert eine größere Kraftübertragung der Verbindung ermöglichen kann.

Gemäß einem weiteren Aspekt der vorliegenden Erfindung ist das Verbindungselement zum Verbinden zweier Enden eines bandförmigen Artikels oder mehrerer bandförmiger Artikel ausgebildet. Mit anderen Worten gesagt kann ein Verbindungselement sowohl zwei bandförmige Artikel in Reihe miteinander verbinden als auch zwei Enden eines bandförmigen Artikels zu einem endlosen bandförmigen Artikel verbinden. Weiterhin kann durch das Verbindungselement auch eine Verbindung mehrerer in Reihe miteinander verbundener bandförmiger Artikel zu einem endlos geschlossenen bandförmigen Artikel erfolgen. Die Vorteile einer Klemmverbindung zur Übertragung hoher Zugkräfte lassen sich hierdurch auf verschiedenste Anwendungen und Anordnungen von bandförmigen Artikeln übertragen. Für viele Anwendungen, insbesondere für Anwendungen mit besonders langen bandförmigen Artikeln kann ein erfindungsgemäßes Verbindungselement vorteilhaft sein, da hierüber eine Skalierung der Länge des bandförmigen Artikels über Einzelsegmente von bandförmigen Artikeln erzielt werden kann. Diese Einzelsegmente können als Massenware kostengünstig beschafft und zu einem anwendungsspezifischen Produkt kombiniert werden.

Durch das Öffnen und Schließen des Verbindungselementes sind zudem einzelne Segmente auswechselbar.

Gemäß einem weiteren Aspekt der vorliegenden Erfindung sind das erste Klemmprofil und das Sperrelement gegeneinander verschraubt. Hierbei ist das Sperrelement im Bereich der Verschraubung nicht von der Festigkeitsträgerlage umschlungen, sodass die Festigkeitsträgerlage nicht durch die Verschraubung beschädigt werden kann. Eine Verschraubung bietet den Vorteil, dass die Klemmkraft zwischen Klemmprofil und Sperrelement variabel eingestellt werden kann. Weiterhin ist eine Schraubverbindung lösbar, was einen einfachen Austausch einzelner bandförmiger Artikel erleichtern kann.

Gemäß einem weiteren Aspekt der vorliegenden Erfindung weist die Klemmverbindung das erste Klemmprofil und ein zweites Klemmprofil auf, wobei das erste Klemmprofil auf der Oberseite des bandförmigen Artikels und das zweite Klemmprofil auf der Unterseite des bandförmigen Artikels angeordnetes ist. Die Klemmverbindung umgreift das mindestens eine Sperrelement abschnittsweise um den Umfang, vorzugsweise um mehr als die Hälfte des Umfangs. Der Verbund aus Sperrelement und umschlingender Festigkeitsträgerlage ist in der Klemmverbindung des Verbindungselementes angeordnet und wird durch Verspannen des ersten Klemmprofils und des zweiten Klemmprofils festgeklemmt.

Mit anderen Worten gesagt können die frei gelegten Stahlkorde auf sich selbst um 180° derart umgeschlagen sein, indem die Stahlkorde den Außenumfang des Sperrelementes umschlingen, von dem Außenumfang des Sperrelementes ablaufen und auf sich selbst zum Liegen kommen. So angeordnet, kann der mindestens eine Verbund aus Sperrelement und dem Stahlkord von der zweiteiligen Klemmverbindung des Verbindungselementes aufgenommen werden. Die zweiteilige Klemmverbindung weist ein auf der Oberseite des bandförmigen Artikels angeordnetes erstes Klemmprofil und ein auf der Unterseite des bandförmigen Artikels angeordnetes zweites Klemmprofil auf, welche jeweils auf der dem Verbund aus Sperrelement und dem Stahlkord zugewandten Seite mindestens eine konkave Ausnehmung aufweisen können, die quer zur Längsrichtung des bandförmigen Artikels ausgerichtet ist. In diesen konkaven Ausnehmungen des ersten und zweiten Klemmprofils kann der Verbund aus Sperrelement und Stahlkord aufgenommen werden. Durch ein Verspannen des ersten Klemmprofils und des zweiten Klemmprofils gegeneinander wird der Verbund aus Sperrelement und Stahlkord zwischen erstem und zweitem Klemmprofil eingeklemmt. So können die zuvor genannten Vorteile auf eine derartige Ausführungsform der Verbindung übertragen werden. Zur Aufnahme zweier Enden eines oder mehrerer bandförmiger Artikel können die Klemmprofile jeweils eine weitere konkave Ausnehmung aufweisen.

Gemäß einem weiteren Aspekt der vorliegenden Erfindung sind das erste Klemmprofil und das zweite Klemmprofil gegeneinander verschraubt. Eine Verschraubung bietet den Vorteil, dass die Klemmkraft zwischen den Klemmprofilen variabel eingestellt werden kann. Weiterhin ist eine Schraubverbindung lösbar, was einen einfachen Austausch einzelner bandförmiger Artikel erleichtern kann.

Eine weitere vorteilhafte Ausbildung besteht darin, dass das polymere Material des bandförmigen Artikels Polyurethan aufweist, vorzugsweise aus Polyurethan besteht. Hierdurch lassen sich die eingangs erläuterten Vorteile auf bandförmige Artikel aus Polyurethan übertragen und bzw. oder die Eigenschaften und Vorteile von Polyurethan als Material bei dem bandförmigen Artikel nutzen.

Gemäß einem weiteren Aspekt der vorliegenden Erfindung weist die Unterseite des bandförmigen Artikels eine Profilierung, vorzugsweise in der Querrichtung ausgerichtete Zähne, auf. Hierdurch lassen sich die eingangs erläuterten Vorteile auf Antriebsriemen, insbesondere auf Zahnriemen übertragen.

Gemäß einem weiteren Aspekt weist das zweite Klemmprofil eine Profilierung analog der an der Unterseite des bandförmigen Artikels auf. Auf besonders vorteilhafte Weise kann über das Klemmprofil, zum Beispiel bei Anwendung an Zahnriemen, durch die Profilierung eine Antriebsleistung von einer Riemenscheibe in den bandförmigen Artikel eingeleitet werden. Dies kann die Belastung der übrigen mit der Riemenscheibe in Kontakt stehenden Riemenzähne reduziert und Lastspitzen vermieden werden.

Gemäß einem weiteren vorteilhaften Aspekt der erfindungsgemäßen Verbindung weist die Härte der Festigkeitsträgerlage und die Härte des ersten Klemmprofils und / oder des zweiten Klemmprofils und / oder des Sperrelementes ein Verhältnis von mindestens 3 zu 1 auf. Vorzugsweise wird die Härte nach Brinell (HBW) bestimmt. Hierbei erweist es sich als vorteilhaft, dass ein Formschluss zwischen Stahlkord und Klemmprofil und / oder Sperrelement mit steigender Härtedifferenz zwischen dem härteren Stahlkord und dem weicheren Klemmprofil bzw. dem Sperrelement, mit einer sinkenden Klemmkraft einsetzen kann. So können die zuvor erläuterten Vorteile auf Klemmverbindungen mit geringer Klemmkraft übertragen werden.

Eine weitere Vorteilhafte Ausbildung der erfindungsgemäßen Verbindung sieht vor, dass das Material des ersten Klemmprofils und / oder des zweiten Klemmprofils und / oder des Sperrelementes Aluminium oder Kupfer oder Messing aufweist, vorzugsweise daraus ausgebildet ist. Die Materialauswahl ermöglicht es, eine anwendungsspezifische Lösung bereitzustellen, bei der die technischen Anforderungen hinsichtlich mechanischer Belastbarkeit mit wirtschaftlichen Anforderungen hinsichtlich der Kosten in Einklang gebracht werden können.

Gemäß einem weiteren Aspekt der vorliegenden Erfindung ist die Festigkeitsträgerlage mit dem polymeren Material des bandförmigen Artikels durchsetzt. Mit anderen Worten gesagt sind die Zwischenräume der einzelnen Litzen des Stahlkords der Festigkeitsträgerlage mit dem polymeren Material gefüllt. Dies kann auf vorteilhafte Weise bewirken, dass der Stahlkord durch das polymere Material eine Stützwirkung erfahren kann, sodass dieser innerhalb der Klemmverbindung unter Einwirken einer Klemmkraft nicht verformt werden kann. So kann der Stahlkord auch innerhalb der Klemmverbindung seine mechanischen Eigenschaften beibehalten.

Mit anderen Worten gesagt kann durch die mit dem polymeren Material durchsetzten Festigkeitsträgerlage innerhalb der Klemmverbindung ein Festigkeitsabbau des Stahlkordes vermieden werden. Eine besonders vorteilhafte Stützwirkung der Festigkeitsträgerlage kann bei einer Durchsetzung von 20 % bis 80 % der Zwischenräume der einzelnen Litzen des Stahlkords der Festigkeitsträgerlage gegeben sein.

Anspruch 12 offenbart ein Antriebs- oder Fördersystem mit mindestens einer erfindungsgemäßen Verbindung. Die eingangs erläuterten Vorteile der erfindungsgemäßen Verbindung lassen sich auf sämtliche Antriebs- oder Fördersysteme übertragen. Hierzu können insbesondere landwirtschaftliche Erntemaschinen zählen.

### Erläuterung Figuren

Anhand der Figuren werden im Folgenden Ausführungsbeispiele der Erfindung näher erläutert.
Fig. 1 zeigt eine erste Ausführungsform der erfindungsgemäßen Verbindung mit einer zweiteiligen Klemmverbindung zur Verbindung zweier Enden des bandförmigen Artikels in der Seitenansicht.
Fig. 2 zeigt eine weitere Ausführungsform der erfindungsgemäßen Verbindung mit einer einteiligen Klemmverbindung zur Verbindung zweier Enden des bandförmigen Artikels in der Seitenansicht.
Fig. 3 zeigt eine weitere Ausführungsform der erfindungsgemäßen Verbindung mit einer einteiligen Klemmverbindung zur Verbindung zweier Enden des bandförmigen Artikels in der Seitenansicht, wobei der bandförmige Artikel in die Klemmverbindung einläuft.

In den beiden dargestellten Ausführungsbeispielen wird der bandförmige Artikel 100 durch Verbindung des ersten Endes 101 und des zweites Endes 102 mit dem Verbindungselement 1 zu einem endlosen Band geschlossen.

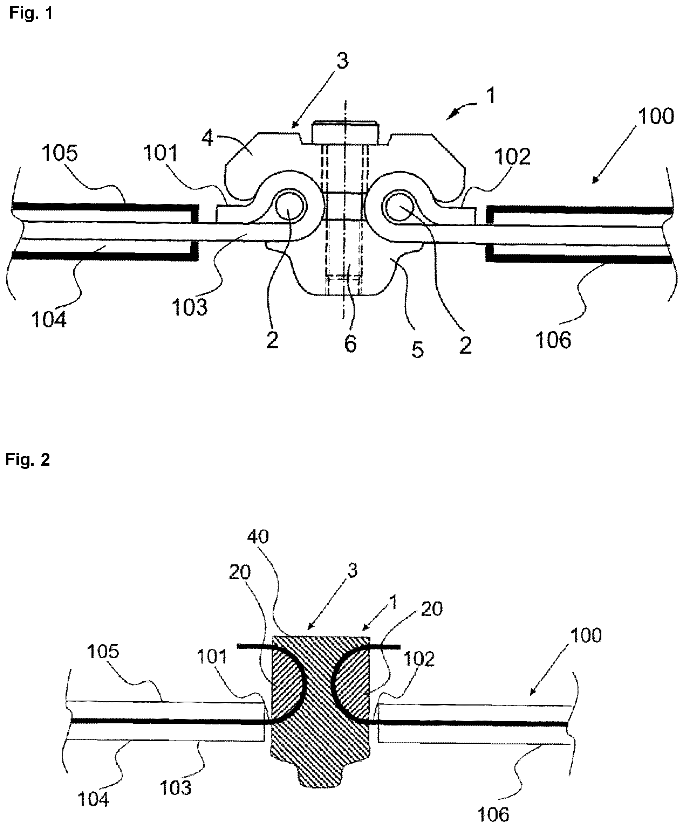

Das Verbindungselement 1 in Figur 1 weist zwei Sperrelemente 2, ein erstes auf der Oberseite 105 des bandförmigen Artikels 100 angeordnetes Klemmprofil 4 und ein zweites auf der Unterseite 106 des bandförmigen Artikels 100 angeordnetes Klemmprofil 5 auf. Die Klemmprofile 4, 5 und die Sperrelemente 2 sind aus Aluminium ausgebildet, das im Vergleich zu dem Stahlkord der Festigkeitsträgerlage 103 eine geringere Härte aufweist. Zum Ausbilden der Klemmverbindung 3 werden das erste Klemmprofil 4 und das zweite Klemmprofil 5 über eine Verschraubung 6 gegeneinander verspannt. Das zweite Klemmprofil 5 weist in diesem Ausführungsbeispiel die Kontur eines Riemenzahnes auf, sodass das zweite Klemmprofil 5 in das korrespondierende Profil einer Riemenscheibe einlaufen kann und somit eine Kraft in den bandförmigen Artikel 100, welcher beispielsweise ein Zahnriemen sein kann, einleiten kann.

Die Festigkeitsträgerlage 103 ist an dem ersten Ende 101 und dem zweiten Ende 102 freigelegt und von dem Polyurethan befreit. So freigelegt umschlingt die Festigkeitsträgerlage 103 des ersten Endes 101 und die Festigkeitsträgerlage 103 des zweiten Endes 102 das jeweils zugeordnete Sperrelement 2 derart, dass die Festigkeitsträgerlage 103 jeweils auf sich selbst umgeschlagen zum Liegen kommt.

Der Verbund aus Sperrelement 2 und dem jeweiligen Ende 101, 102 wird durch die Klemmverbindung 3 aufgenommen. Hierbei umschließt das erste Klemmprofil 4 die Festigkeitsträgerlage 103 von der Oberseite 105 des bandförmigen Artikels 100 aus gesehen, während das zweite Klemmprofil 5 die Festigkeitsträgerlage 103 von der Unterseite 106 des bandförmigen Artikels 100 umschließt. Durch Verspannen der Klemmprofile 4, 5 über die Verschraubung 6 werden die beiden Enden 101, 102 des bandförmigen Artikels 100 in der Klemmverbindung 3 gehalten. Durch die Härtedifferenz der Festigkeitsträgerlage 103 aus Stahl und dem Aluminiummaterial der Klemmprofile 4, 5 und den Sperrelementen 2 verformen sich die mit der Festigkeitsträgerlage 103 in Kontakt stehenden Flächen der Klemmprofile 4, 5 und der Sperrelemente 2, sodass sich die Oberflächenstruktur der Festigkeitsträgerlage 103 in den Klemmprofilen 4, 5 und den Sperrelementen 2 abbildet und ein Formschluss hierzwischen entsteht.

Das Verbindungselement 1 in Figur 2 weist zwei Sperrelemente 20 und ein erstes Klemmprofil 40 auf. Das erste Klemmprofil 40 und die Sperrelemente 20 sind aus Aluminium ausgebildet, das im Vergleich zu dem Stahlkord der Festigkeitsträgerlage 103 eine geringere Härte aufweist. Zum Ausbilden der Klemmverbindung 3 werden das erste Klemmprofil 40 und die Sperrelemente 20 über eine nicht näher dargestellte Verschraubung 6 gegeneinander verspannt. Im Bereich der Verschraubung sind die Sperrelemente 20 nicht durch die Festigkeitsträgerlage 103 umschlungen. Das Klemmprofil 40 weist in dieser Ausführungsform auf der der Unterseite 106 des bandförmigen Artikels 100 zugeordneten Seite das Zahnprofil eines Zahnriemens auf.

Auch hier ist die Festigkeitsträgerlage 103 an dem ersten Ende 101 und dem zweiten Ende 102 freigelegt und von dem Polyurethan befreit. So freigelegt umschlingt die Festigkeitsträgerlage 103 des ersten Endes 101 und die Festigkeitsträgerlage 103 des zweiten Endes 102 das jeweils zugeordnete Sperrelement 20 in einen Winkel von 180°. Im Bereich des Einlaufs und des Auslaufs der Festigkeitsträgerlage 103 in die Klemmverbindung 3, weisen das Klemmprofil 40 und die Sperrelemente 20 Radien auf, sodass die Festigkeitsträgerlage 103 nicht durch scharfkantige Übergänge beschädigt wird.

Die konkaven Ausnehmungen des ersten Klemmprofils 40 nehmen den Verbund aus den halbkreisförmigen Sperrelementen 20 und der Festigkeitsträgerlage 103 des jeweiligen Endes 101, 102 auf, wobei die Festigkeitsträgerlage 103 in dem Bereich des Umschlingungsbogens von 180° um die Sperrelemente 20, zwischen den Sperrelementen 20 und dem ersten Klemmprofil 40 angeordnet ist. Durch Verspannen des ersten Klemmprofils 40 mit den Sperrelementen 20 werden die beiden Enden 101, 102 des bandförmigen Artikels 100 in der Klemmverbindung 3 gehalten. Durch die Härtedifferenz der Festigkeitsträgerlage 103 aus Stahl und dem Aluminiummaterial des ersten Klemmprofils 40 und den Sperrelementen 20 verformen sich die mit der Festigkeitsträgerlage 103 in Kontakt stehenden Flächen des ersten Klemmprofils 40 und der Sperrelemente 20, sodass sich die Oberflächenstruktur der Festigkeitsträgerlage 103 in dem ersten Klemmprofil 40 und den Sperrelementen 20 abbildet und ein Formschluss hierzwischen entsteht.

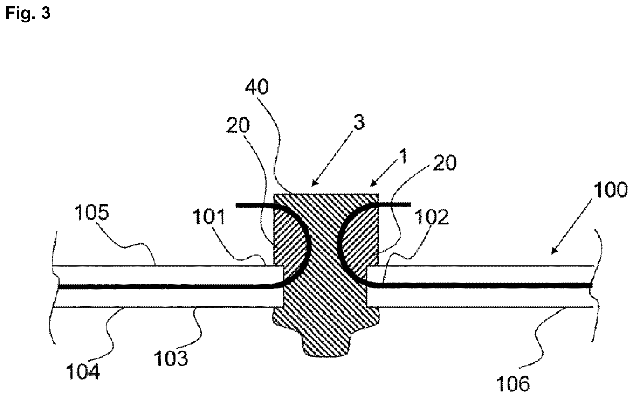

Figur 3 zeigt eine weitere Ausführungsform, basierend auf der Ausführung der Figur 2, wobei der Grundkörper des bandförmigen Artikels 100 in die Klemmverbindung 3 einläuft. So ist die Festigkeitsträgerlage 103 außerhalb der Klemmverbindung durch das polymere Material 104 umgeben und vor Umwelteinflüssen, wie zum Beispiel Korrosion, geschützt.

In allen Ausführungsbeispielen ist der bandförmige Artikel 100 aus einem Grundkörper aus polymerem Material 104 und einer in Längsrichtung verlaufenden Festigkeitsträgerlage aus Stahlkord 103 gebildet. Das polymere Material 104 ist in den Ausführungen genauer gesagt ein Polyurethan.

### Bezugszeichenliste (Teil der Beschreibung)

- 1: Verbindungselement
- 2: Sperrelement
- 3: Klemmverbindung
- 4: erstes Klemmprofil
- 5: zweites Klemmprofil
- 6: Verschraubung
- 20: Sperrelement
- 40: erstes Klemmprofil

- 100: bandförmiger Artikel
- 101: erstes Ende
- 102: zweites Ende
- 103: Festigkeitsträgerlage aus Stahlkorden
- 104: polymeres Material
- 105: Oberseite des bandförmigen Artikels
- 106: Unterseite des bandförmigen Artikels

## Patentansprüche

1. Verbindung mit einem Verbindungselement (1) und wenigstens einem Ende eines bandförmigen Artikels (100),
wobei der bandförmigen Artikel (100) aus mindestens einer Festigkeitsträgerlage aus Stahlkorden (103) und einem diese zumindest im Wesentlichen umschließenden polymeren Material (104) aufgebaut ist,
wobei der bandförmige Artikel (100) eine Oberseite (105) und eine Unterseite (106) aufweist,
wobei das Verbindungselement (1) mindestens ein Sperrelement (2, 20) und eine Klemmverbindung (3) aufweist,
wobei die Klemmverbindung (3) mindestens ein erstes Klemmprofil (4, 40) aufweist, wobei die mindestens eine Festigkeitsträgerlage (103) mindestens eines Endes (101, 102) um eine vorbestimmte Länge von dem die Festigkeitsträgerlage (103) umgebenden polymeren Material (104) befreit ist,
wobei die mindestens eine Festigkeitsträgerlage (103) mindestens eines Endes (101, 102) das Sperrelement (2, 20) zumindest teilweise umschlingt und die Festigkeitsträgerlage (103) mindestens eines Endes (101, 102) zwischen dem Sperrelement (2, 20) und dem mindestens ersten Klemmprofil (4, 40) festgeklemmt ist,
**dadurch gekennzeichnet, dass**
das erste Klemmprofil (4, 40) und / oder das Sperrelement (2, 20) aus einem Material mit einer im Vergleich zu den Stahlkorden der Festigkeitsträgerlage (103) geringeren Härte ausgebildet ist / sind, sodass bei Ausübung einer Klemmkraft das Material des ersten Klemmprofils (4, 40) und / oder des Sperrelementes (2, 20) in Kontakt mit der Festigkeitsträgerlage (103) kaltverformt wird / werden und sich die Oberflächenstruktur der Festigkeitsträgerlage (103) als Negativ in dem ersten Klemmprofil (4, 40) und / oder dem Sperrelement (2, 20) abbildet, sodass ein Formschluss zwischen Festigkeitsträgerlage (103) und dem ersten Klemmprofil (4, 40) und / oder dem Sperrelement (2, 20) ausgebildet wird, wobei das mindestens erste Klemmprofil (4, 40) und / oder das Sperrelement (2, 20) an der der Festigkeitsträgerlage (103) zugewandten Oberfläche Rillen aufweisen, wobei die Rillen gleichsinnig zur Festigkeitsträgerlage aus Stahlkorden (103) ausgerichtet sind und ausgebildet sind, die Stahlkorde zumindest teilweise zu umgreifen.

2. Verbindung nach Anspruch 1,
**dadurch gekennzeichnet, dass**
das Verbindungselement (1) zum Verbinden zweier Enden (101, 102) eines bandförmigen Artikels (100) oder mehrerer bandförmiger Artikel (100) ausgebildet ist.

3. Verbindung nach einem der vorhergehenden Ansprüche,
**dadurch gekennzeichnet, dass**
das erste Klemmprofil (40) und das Sperrelement (20) gegeneinander verschraubt sind.

4. Verbindung nach einem der Ansprüche 1 bis 2,
**dadurch gekennzeichnet, dass**
die Klemmverbindung (3) das erste Klemmprofil (4) und ein zweites Klemmprofil (5) aufweist, wobei das erste Klemmprofil (4) auf der Oberseite (105) des bandförmigen Artikels (100) angeordnet ist und das zweite Klemmprofil (5) auf der Unterseite (106) des bandförmigen Artikels (100) angeordnetes ist,
wobei die Klemmverbindung (3) das mindestens eine Sperrelement (2) abschnittsweise um den Umfang, vorzugsweise um mehr als die Hälfte des Umfangs umgreift, und der Verbund aus Sperrelement (2) und umschlingender Festigkeitsträgerlage (103) in der Klemmverbindung (3) des Verbindungselementes (1) angeordnet ist und der Verbund aus Sperrelement (2) und umschlingender Festigkeitsträgerlage (3) durch Verspannen des ersten Klemmprofils (4) und des zweiten Klemmprofils (5) festgeklemmt ist.

5. Verbindung nach Anspruch 4,
**dadurch gekennzeichnet, dass**
das erste Klemmprofil (4) und das zweite Klemmprofil (5) gegeneinander verschraubt sind.

6. Verbindung nach einem der vorhergehenden Ansprüche,
**dadurch gekennzeichnet, dass** das polymere Material (104) des bandförmigen Artikels (100) Polyurethan aufweist, vorzugsweise aus Polyurethan besteht.

7. Verbindung nach einem der vorhergehenden Ansprüche,
**dadurch gekennzeichnet, dass**
die Unterseite (106) des bandförmigen Artikels (100) eine Profilierung, vorzugsweise in der Querrichtung ausgerichtete Zähne, aufweist.

8. Verbindung nach einem der Ansprüche 4 bis 7,
**dadurch gekennzeichnet, dass**
das zweite Klemmprofil (5) eine Profilierung analog der an der Unterseite (106) des bandförmigen Artikels (100) aufweist.

9. Verbindung nach einem der vorhergehenden Ansprüche,
**dadurch gekennzeichnet, dass**
die Härte der Festigkeitsträgerlage (103) und die Härte des ersten Klemmprofils (4, 40) und / oder des zweiten Klemmprofils (5) und / oder des Sperrelementes (2, 20) ein Verhältnis von mindestens 3 zu 1 aufweist.

10. Verbindung nach einem der vorhergehenden Ansprüche,
**dadurch gekennzeichnet, dass**
das Material des ersten Klemmprofils (4, 40) und / oder des zweiten Klemmprofils (5) und / oder des Sperrelementes (2, 20) Aluminium oder Kupfer oder Messing aufweist, vorzugsweise daraus ausgebildet ist.

11. Verbindung nach einem der vorhergehenden Ansprüche,
**dadurch gekennzeichnet, dass**
die Festigkeitsträgerlage (103) mit dem polymeren Material (104) des bandförmigen Artikels (100) durchsetzt ist.

12. Antriebs oder Fördersystem mit mindestens einer Verbindung nach einem der Ansprüche 1 bis 11.

## Claims

1. Connection between a connecting element (1) and at least one end of a band-like article (100),
wherein the band-like article (100) is constructed of at least one reinforcing layer (103) composed of steel cords and a polymeric material (104) which at least substantially surrounds said layer, wherein the band-like article (100) has a top side (105) and a bottom side (106),
wherein the connecting element (1) has at least one blocking element (2, 20) and a clamping connection (3),
wherein the clamping connection (3) has at least a first clamping profile (4, 40), wherein the at least one reinforcing layer (103) of at least one end (101, 102) is freed, by a predetermined length, from the polymeric material (104) surrounding the reinforcing layer (103),
wherein the at least one reinforcing layer (103) of at least one end (101, 102) at least partially encircles the blocking element (2, 20) and the reinforcing layer (103) of at least one end (101, 102) is clamped between the blocking element (2, 20) and the at least first clamping profile (4, 40),
**characterized in that**
the first clamping profile (4, 40) and/or the blocking element (2, 20) are/is formed from a material with a lower hardness in comparison with the steel cords of the reinforcing layer (103), such that, when a clamping force is exerted, the material of the first clamping profile (4, 40) and/or of the blocking element (2, 20) in contact with the reinforcing layer (103) is cold-formed and the surface structure of the reinforcing layer (103) is reproduced as a negative in the first clamping profile (4, 40) and/or the blocking element (2, 20), such that a form fit is formed between the reinforcing layer (103) and the first clamping profile (4, 40) and/or the blocking element (2, 20), wherein the at least first clamping profile (4, 40) and/or the blocking element (2, 20) have grooves on the surface facing towards the reinforcing layer (103), wherein the grooves are oriented in the same direction in relation to the reinforcing layer (103) composed of steel cords and are formed so as to at least partially engage around the steel cords.

2. Connection according to Claim 1,
**characterized in that**
the connecting element (1) is designed to connect two ends (101, 102) of a band-like article (100) or multiple band-like articles (100).

3. Connection according to either of the preceding claims,
**characterized in that**
the first clamping profile (40) and the blocking element (20) are screwed to one other.

4. Connection according to either of Claims 1 and 2,
**characterized in that**
the clamping connection (3) has the first clamping profile (4) and a second clamping profile (5), wherein the first clamping profile (4) is arranged on the top side (105) of the band-like article (100) and the second clamping profile (5) is arranged on the bottom side (106) of the band-like article (100),
wherein the clamping connection (3) partially engages around the periphery, preferably around more than half of the periphery, of the at least one blocking element (2), and the combination of blocking element (2) and encircling reinforcing layer (103) is arranged in the clamping connection (3) of the connecting element (1) and the combination of blocking element (2) and encircling reinforcing layer (3) is clamped by bracing of the first clamping profile (4) and of the second clamping profile (5).

5. Connection according to Claim 4,
**characterized in that**
the first clamping profile (4) and the second clamping profile (5) are screwed to one another.

6. Connection according to one of the preceding claims,
**characterized in that** the polymeric material (104) of the band-like article (100) comprises polyurethane, preferably consists of polyurethane.

7. Connection according to one of the preceding claims,
**characterized in that**
the bottom side (106) of the band-like article (100) has a profiling, preferably teeth oriented in the transverse direction.

8. Connection according to one of Claims 4 to 7,
**characterized in that**
the second clamping profile (5) has a profiling analogous to that on the bottom side (106) of the band-like article (100).

9. Connection according to one of the preceding claims,
**characterized in that**
the hardness of the reinforcing layer (103) and the hardness of the first clamping profile (4, 40) and/or of the second clamping profile (5) and/or of the blocking element (2, 20) exhibits a ratio of at least 3 to 1.

10. Connection according to one of the preceding claims,
**characterized in that**
the material of the first clamping profile (4, 40) and/or of the second clamping profile (5) and/or of the blocking element (2, 20) comprises aluminium or copper or brass, preferably is formed therefrom.

11. Connection according to one of the preceding claims,
**characterized in that**
the reinforcing layer (103) is permeated with the polymeric material (104) of the band-like article (100).

12. Drive or conveying system having at least one connection according to one of Claims 1 to 11.

## Revendications

1. Liaison avec un élément de liaison (1) et au moins une extrémité d'un article en forme de bande (100),
l'article en forme de bande (100) étant composé d'au moins une couche de support de résistance en câbles d'acier (103) et d'un matériau polymère (104) entourant au moins essentiellement celle-ci, l'article en forme de bande (100) présentant un côté supérieur (105) et un côté inférieur (106),
l'élément de liaison (1) présentant au moins un élément de blocage (2, 20) et une liaison de serrage (3),
la liaison de serrage (3) présentant au moins un premier profilé de serrage (4, 40), l'au moins une couche de support de résistance (103) d'au moins une extrémité (101, 102) étant libérée sur une longueur prédéterminée du matériau polymère (104) entourant la couche de support de résistance (103),
l'au moins une couche de support de résistance (103) d'au moins une extrémité (101, 102) enlaçant au moins partiellement l'élément de blocage (2, 20) et la couche de support de résistance (103) d'au moins une extrémité (101, 102) étant serrée entre l'élément de blocage (2, 20) et l'au moins premier profilé de serrage (4, 40),
**caractérisée en ce que**
le premier profilé de serrage (4, 40) et/ou l'élément de blocage (2, 20) est/sont réalisé(s) en un matériau d'une dureté inférieure en comparaison de celle des câbles d'acier de la couche de support de résistance (103), de telle sorte que, lorsqu'une force de serrage est exercée, le matériau du premier profilé de serrage (4, 40) et/ou de l'élément de blocage (2, 20) est/sont déformé(s) à froid en contact avec la couche de support de résistance (103) et la structure de surface de la couche de support de résistance (103) se forme en négatif dans le premier profilé de serrage (4, 40) et/ou l'élément de blocage (2, 20), de telle sorte qu'une liaison par complémentarité de forme est réalisée entre la couche de support de résistance (103) et le premier profilé de serrage (4, 40) et/ou l'élément de blocage (2, 20), l'au moins un premier profilé de serrage (4, 40) et/ou l'élément de blocage (2, 20) présentant des rainures sur la surface tournée vers la couche de support de résistance (103), les rainures étant orientées dans le même sens que la couche de support de résistance composée de câbles d'acier (103) et étant conçues pour venir en prise au moins partiellement autour des câbles d'acier.

2. Liaison selon la revendication 1,
**caractérisée en ce que**
l'élément de liaison (1) est réalisé pour relier deux extrémités (101, 102) d'un article en forme de bande (100) ou de plusieurs articles en forme de bande (100).

3. Liaison selon l'une quelconque des revendications précédentes,
**caractérisée en ce que**
le premier profilé de serrage (40) et l'élément de blocage (20) sont vissés l'un contre l'autre.

4. Liaison selon l'une quelconque des revendications 1 à 2,
**caractérisée en ce que**
la liaison de serrage (3) présente le premier profilé de serrage (4) et un deuxième profilé de serrage (5), le premier profilé de serrage (4) étant agencé sur le côté supérieur (105) de l'article en forme de bande (100) et le deuxième profilé de serrage (5) étant agencé sur le côté inférieur (106) de l'article en forme de bande (100),
la liaison de serrage (3) venant en prise autour de l'au moins un élément de blocage (2) par sections sur la circonférence, de préférence sur plus de la moitié de la circonférence, et l'ensemble composé de l'élément de blocage (2) et de la couche de support de résistance (103) qui l'enlace étant agencé dans la liaison de serrage (3) de l'élément de liaison (1) et l'ensemble composé de l'élément de blocage (2) et de la couche de support de résistance (3) qui l'enlace étant serré par serrage du premier profilé de serrage (4) et du deuxième profilé de serrage (5).

5. Liaison selon la revendication 4,
**caractérisée en ce que**
le premier profilé de serrage (4) et le deuxième profilé de serrage (5) sont vissés l'un contre l'autre.

6. Liaison selon l'une quelconque des revendications précédentes, **caractérisée en ce que** le matériau polymère (104) de l'article en forme de bande (100) présente du polyuréthane, de préférence est constitué de polyuréthane.

7. Liaison selon l'une quelconque des revendications précédentes,
**caractérisée en ce que**
le côté inférieur (106) de l'article en forme de bande (100) présente un profilage, de préférence des dents orientées dans la direction transversale.

8. Liaison selon l'une quelconque des revendications 4 à 7,
**caractérisée en ce que**
le deuxième profilé de serrage (5) présente un profilage analogue à celui sur le côté inférieur (106) de l'article en forme de bande (100).

9. Liaison selon l'une quelconque des revendications précédentes, **caractérisée en ce que**
la dureté de la couche de support de résistance (103) et la dureté du premier profilé de serrage (4, 40) et/ou du deuxième profilé de serrage (5) et/ou de l'élément de blocage (2, 20) présentent un rapport d'au moins 3 à 1.

10. Liaison selon l'une quelconque des revendications précédentes, **caractérisée en ce que**
le matériau du premier profilé de serrage (4, 40) et/ou du deuxième profilé de serrage (5) et/ou de l'élément de blocage (2, 20) présente de l'aluminium ou du cuivre ou du laiton, de préférence est réalisé à partir de ceux-ci.

11. Liaison selon l'une quelconque des revendications précédentes, **caractérisée en ce que**
la couche de support de résistance (103) est intercalée avec le matériau polymère (104) de l'article en forme de bande (100).

12. Système d'entraînement ou de transport avec au moins une liaison selon l'une quelconque des revendications 1 à 11.
